# EUROPEAN PATENT APPLICATION

(11) **EP 3 216 343 A2**
(43) Date of publication of application: **13.09.2017**
(21) Application number: 17160242.8
(22) Date of filing: 10.03.2017
(51) Int. Cl.: A01K 1/01

(54) **LITTER CONTAINER**

(30) Priority: 10.03.2016 US 201615065958
(71) Applicant: Doskocil Manufacturing Company, Inc., Arlington, Texas 76011 (US)
(72) Inventor: Veness, David, Fort Worth, TX 76244 (US); Baker, Nicholas, Fort Worth, TX 76110 (US)
(74) Representative: Intellectual Property Services GmbH

(57) **Abstract**

A litter container comprises a bottom pan and a top pan. The bottom pan has a first inner space. The top pan has a second inner space and is configured to be disposed on the bottom pan so that the first and second inner spaces form an interior space of the litter container. The top pan has a door assembly. The door assembly comprises a portion of a top surface of the litter container and a portion of a front surface of the litter container.

## Description

### BACKGROUND

### Field of the Invention

This invention generally relates to a litter container. More specifically, the present invention relates to a covered litter container that includes a door assembly that comprises a portion of a top surface and a portion of a front surface of the litter container. Background Information

It has become increasingly popular in the pet products field to provide covered litter containers. Typically, a covered litter container includes a bottom pan configured to contain litter and a top pan configured to sit on top of the bottom pan. The covered litter container can also include a door assembly that enables a pet to conveniently enter and exit the litter container. It has become increasingly popular to furnish litter boxes with a door assembly having a first door and a second door for convenient access to the interior of the litter container.

### SUMMARY

Generally, the present disclosure is directed to various features of a covered litter container having a door assembly disposed on the top pan.

In one feature, a litter container is provided comprising a bottom pan and a top pan. The bottom pan has a first inner space. The top pan has a second inner space and is configured to be disposed on the bottom pan so that the first and second inner spaces form an interior space of the litter container. The top pan has a door assembly. The door assembly comprises a portion of a top surface of the litter container and a portion of a front surface of the litter container.

Also other objects, features, aspects and advantages of the disclosed litter container will become apparent to those skilled in the art from the following detailed description, which, taken in conjunction with the annexed drawings, discloses one embodiment and two modifications of the litter container.

### BRIEF DESCRIPTION OF THE DRAWINGS

Referring now to the attached drawings which form a part of this original disclosure:
Figure 1 is a perspective view of a litter container having a door assembly in accordance with one illustrated embodiment;
Figure 2 is an exploded view of the top and bottom pans of the litter container of Figure 1;
Figure 3 is a perspective view of the litter container of Figures 1 and 2 with a transparent door of the door assembly swung partially inward;
Figure 4 is a perspective view of the litter container of Figures 1 to 3 with a top door of the door assembly swung partially upward;
Figure 5 is a perspective view of the litter container of Figures 1 to 4 with the top door entirely open with the transparent door overlying the top door;
Figure 6 is a perspective view of a first modified litter container; and
Figure 7 is a perspective view of a second modified litter container.

### DETAILED DESCRIPTION OF EMBODIMENTS

Selected embodiments will now be explained with reference to the drawings. It will be apparent to those skilled in the pet products field from this disclosure that the following descriptions of the embodiments are provided for illustration only and not for the purpose of limiting the invention as defined by the appended claims and their equivalents.

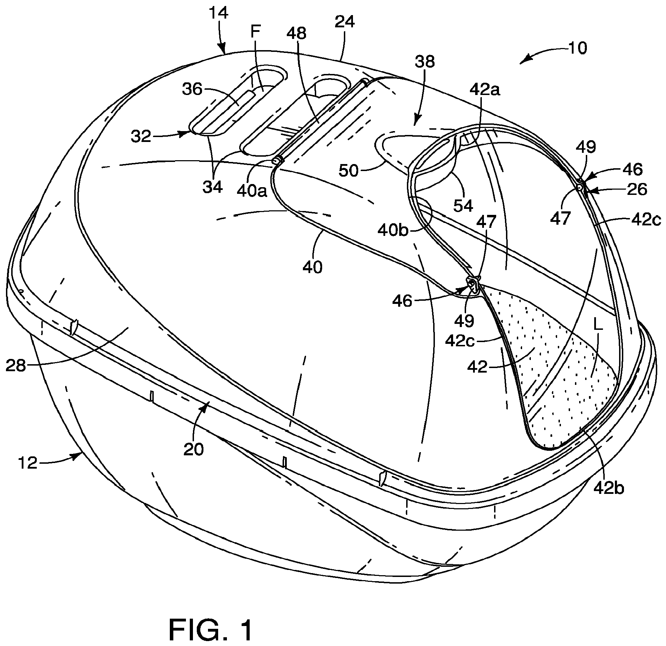

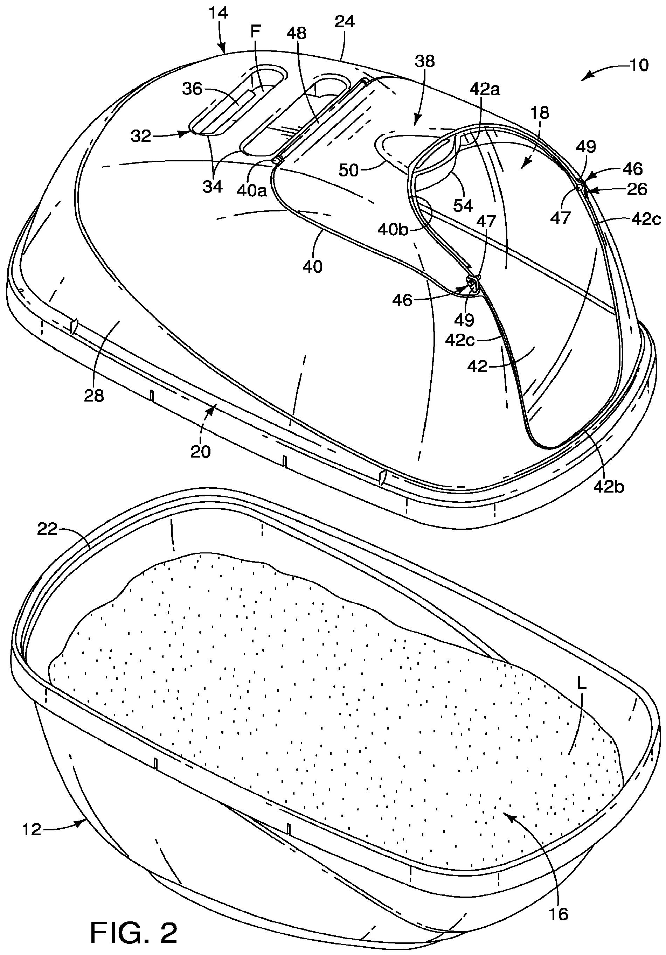

Referring now to Figure 1, a litter container 10 is shown in accordance with a first illustrated embodiment. The litter container 10 is preferably a covered litter container. That is, in one embodiment, the litter container 10 comprises a bottom pan 12 and a top pan 14. The bottom pan 12 has a first inner space 16 configured to contain cat litter L. The top pan 14 is configured to be disposed on top of the bottom pan 12. The top pan 14 has a second inner space 18 and is configured to be fixed to the bottom pan 12 along rimmed portions of the top and bottom pans 12 and 14. As best seen in Figure 2, a top rimmed portion 20 of the top pan 14 is configured to overlie a corresponding bottom rimmed portion 22 of the bottom pan 12. It will be apparent to those skilled in the art from this disclosure that the top and bottom pans 12 and 14 can also be configured with securing members such as clasps and the like as needed and/or desired.

When the top pan 14 is disposed on the bottom pan 12, the first and second inner spaces 18 form an interior space S of the litter container 10. Referring back to Figure 1, as shown in the assembled state, the litter container 10 includes a top surface 24, a front surface 26, a back surface (not shown), two opposite facing side surfaces 28 (only one shown) disposed between the front and back surfaces, and a bottom surface (not shown).

The top pan 14 includes a handle member 32 disposed on the top surface 24. In the illustrated embodiment, the handle member 32 includes two oblong shaped holes 34. It will be apparent to those skilled in the art from this disclosure that the handle member 32 can have additional or fewer holes of a variety of shapes and sizes as needed and/or desired. Moreover, the handle member 32 can be any suitable device as needed and/or desired. Alternatively, the top pan 12 can be modified to have no handle member. Preferably, the handle member 32 includes a filter F for neutralizing pet odor. The filter F can be a foam material that is secured to the handle member 32 by a flange 36 of the handle member 32.

As shown, in one embodiment, the litter container 10 contains a door assembly 38 disposed in a portion of the top surface 24 and a portion of the front surface 26. In particular, the top pan 14 includes the door assembly 38. In this embodiment, the door assembly 38 includes a first door 40 and a second door 42. One of the first and second doors 40 and 42 extends from the top surface 24 of the litter container 10 to the front surface 26 of the litter container 10.

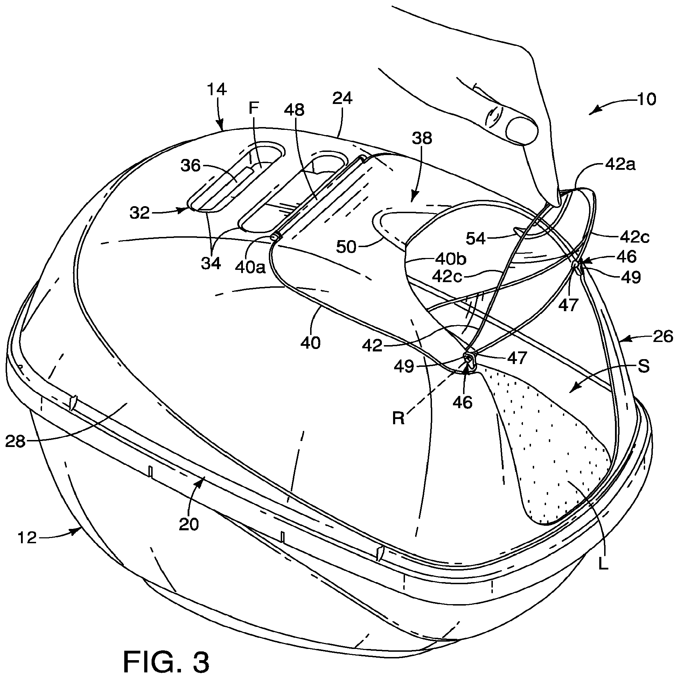

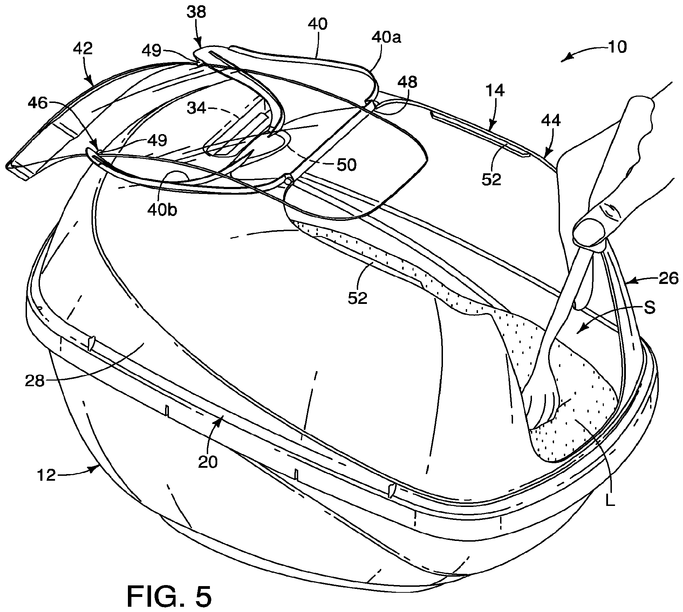

In one embodiment, the first door 40 is a top door that is disposed primarily in the top surface 24. The second door 42 extends from the top surface 24 to the front surface 26 of the litter container 10. It will be apparent to those skilled in the art from this disclosure that the first and second doors 40 and 42 can have different shapes or sizes as needed and/or desired. As best seen in Figures 1 to 3, the second door 42 is a transparent door operatively connected to the first door 40 and configured to open for a pet (not shown) to access the interior space S of the litter container 10. As shown in Figures 3 to 5, the first door 40 is configured to be lifted so that the first and second doors 40 and 42 open to create an open configuration of the door assembly 38 (Figure 5). In this manner, the first and second doors 40 and 42 are configured to be opened to create a larger user access portion 44 than the typical litter container 10 that will enable more convenient cleaning of the litter container 10. In particular, in the open configuration of the door assembly 38, the first door 40 can overly or lie on the top surface 24 of the litter container 10 and the second door 42 overlies the first door 40.

In this embodiment as shown, the first door 40 has a first outer edge 40a and a second inner edge 40b. The first outer edge 40a of the first door 40 defines an upper peripheral edge of the door assembly 38. The second door 42 has a substantially rectangular shape with an upper edge 42a, a bottom edge 42b and two lateral edges 42c. A portion of the lateral edges 42c and the bottom edge 42b of the second door 42 define a bottom peripheral surface of the door assembly 38. Thus, a peripheral edge of the overall door assembly 38 is defined by at least one edge of the first door 40 (the first outer edge 40a) and at least one edge of the second door 42 (bottom edge 42b and the lateral edges 42c). Specifically, as seen in Figures 1 and 2, the second inner edge 40b of the first door 40 has a shape that corresponds to a shape of an upper portion of the second door 42. Accordingly, the door assembly 38 has a continuous and sleek appearance between the first and second doors 40 and 42.

As previously stated, the first door 40 is operatively connected to the second door 42. In particular, the first and second doors 40 and 42 are swingably attached at an attachment area 46 of the door assembly 38. The attachment area 46 includes a portion of the second inner edge 40b of the first door 40 and also includes a portion of each of the lateral edges 42c of the second door 42. Preferably, the attachment area 46 is located approximately midway on the lateral edges 42c of the second door 42.

In the illustrated embodiment as shown, the attachment area 46 includes a pair of first openings (not shown) located at opposite facing sides of the second inner edge 40b of the first door 40. In the illustrated embodiment, each of the first openings are disposed on one of a pair of side flanges 36 of the first door 40. The attachment area 46 also includes a pair of second openings (not shown) located at the lateral edges 42c of the second door 42. Each of the pair of first openings is aligned with one of the pair of second openings to allow a screw 49 to be received through each of the corresponding first and second openings to operatively attach the second door 42 to the first door 40. In this manner the second door 42 is freely swingable with respect to the first door 40 at the attachment area 46. That is, one of the first and second doors 40 and 42 is swingable 360 degrees about a rotational axis R of the attachment area 46. In particular, the second door 42 can swing 360 degrees about the rotational axis R of the attachment area 46 to enable easy adjustability of the door assembly 38.

The first door 40 of the door assembly 38 will now be discussed in greater detail. As previously stated, at least a portion of the first door 40 is disposed on the top surface 24 to define a portion of the top surface 24 of the litter container 10. Also, as previously stated, the first door 40 is configured to be lifted such that the interior space S of the litter container 10 is accessible to the user. In particular, the first door 40 is liftably attached to the top surface 24 of the litter container 10 by a hinge 48. In the illustrated embodiment, the hinge 48 is disposed along the first outer edge 40a of the first door 40.

The first door 40 includes a first handle 50 configured to enable the user to lift the first door 40. In the illustrated embodiment, the first handle 50 is an upward protrusion located on the second inside edge of the first door 40. It will be apparent to those skilled in the art from this embodiment that the first handle 50 can be any suitable handle as needed and/or desired.

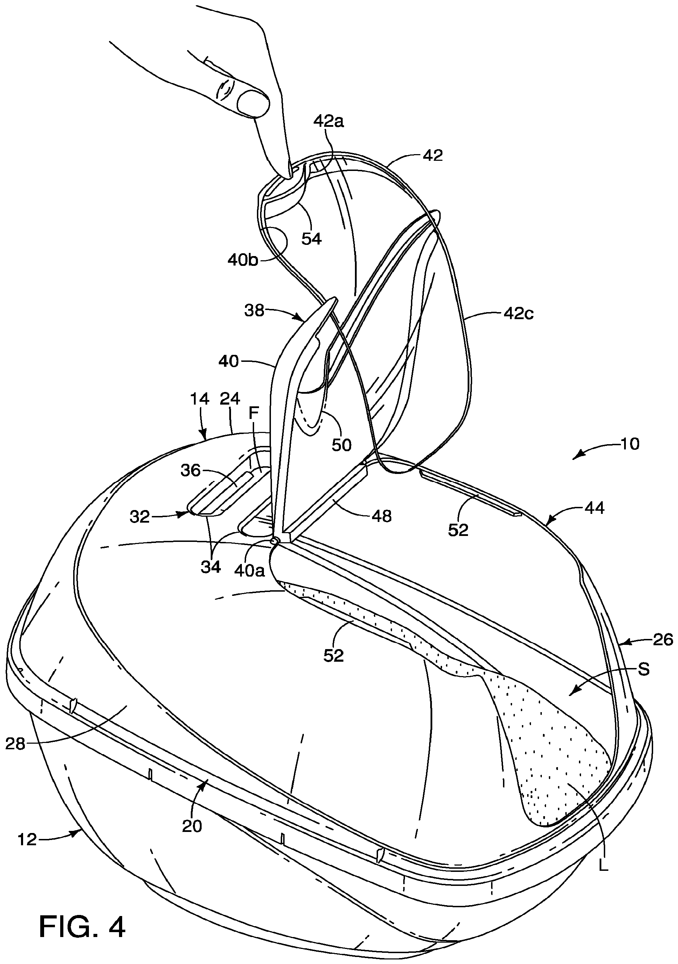

The first door 40 is configured to lie on an interior rim 52 of the litter container 10 in a closed configuration of the first door 40, as seen in Figures 1 and 2. Preferably, as seen in Figures 4 and 5, the interior rim 52 includes a pair of rims each disposed on an edge of the user access portion 44. The first door 40 is configured to overlie the top surface 24 of the litter container 10 in an open configuration of the first door 40, as seen in Figure 4.

The second door 42 will now be discussed in greater detail. As previously stated, the second door 42 is transparent to enable the pet to see into the interior space S of the litter container 10. The second door 42 extends from the top surface 24 to the front surface 26 of the litter box. The second door 42 preferably has a curved surface for an aesthetically pleasing appearance.

The second door 42 is configured to be swingable at the attachment area 46 when first door 40 is lifted. As the attachment area 46 is located approximately midway on the lateral sides of the second door 42, the second door 42 is swingable 360 degrees about the rotational axis R of the attachment area 46.

The second door 42 includes a second handle 54 configured to enable the user to swing the second door 42 with respect to the first door 40 at the attachment area 46. The second handle 54 of the second door 42 is a protrusion disposed on the upper edge 42a of the second door 42. It will be apparent to those skilled in the art from this disclosure that the second handle 54 can be any handle means as needed and/or desired.

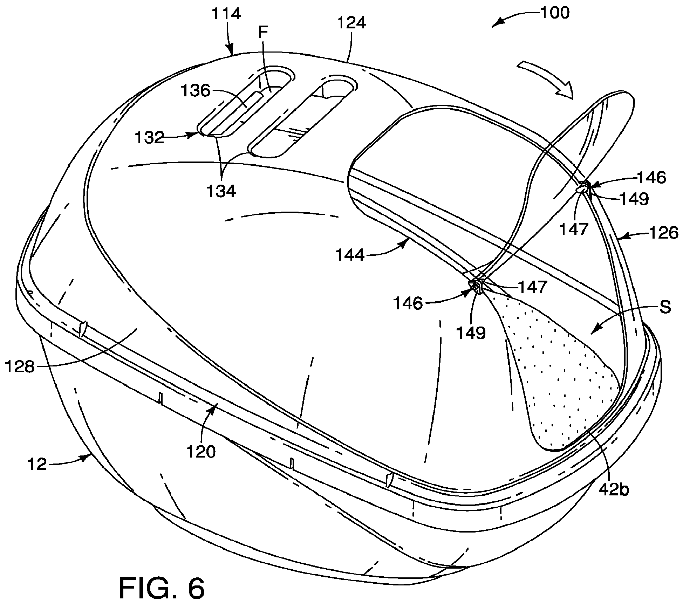

Referring now to Figure 6, a first modified litter container 110 in accordance with a first modification will now be discussed. Due to the similarity between the litter container 110 and the litter container 10, structures of the modified litter container 110 having identical corresponding structures in the litter container 10 will receive the same reference numeral. Any modified structures of the litter container 110 will receive the same reference numeral as that of the corresponding structures of the litter container 10 but increased by 100.

The litter container 110 contains a bottom pan 12 configured to contain cat litter L and a modified top pan 114 of the top pan 14 that is configured to be disposed on top of the bottom pan 12 at rimmed portions 120 of the top and bottom pans 114 and 12. The litter container 110 is identical to the litter container 10 except that the door assembly 38 has been replaced with a modified door assembly 138. The door assembly 138 is disposed on the top pan 114 and opens to form a user access area 44 for the litter container 110. In the litter container 110, the door assembly 138 is a transparent door extending from a top surface 124 of the litter container 110 to a front surface 126 of the litter container 110. The door assembly 138 preferably has a curved surface. Preferably, the door assembly 138 has a shape that corresponds to and defines a shape of the user access area 44.

The attachment area 146 is located approximately mid-way on lateral edges 142c of the door assembly 138. The attachment area 146 includes a pair of openings (not shown) disposed at the lateral edges 142c of the door assembly 138 that are each configured to receive a screw S. In the illustrated embodiment, a pair of screws S attach the door assembly 138 to edges of the user access area 44. The door assembly 138 is rotatable about the screws S. In particular, the door assembly 138 is swingably attached to the litter container 110 at the attachment area 146 such that the door assembly 138 is swingable in a 360 degrees about the attachment area 146.

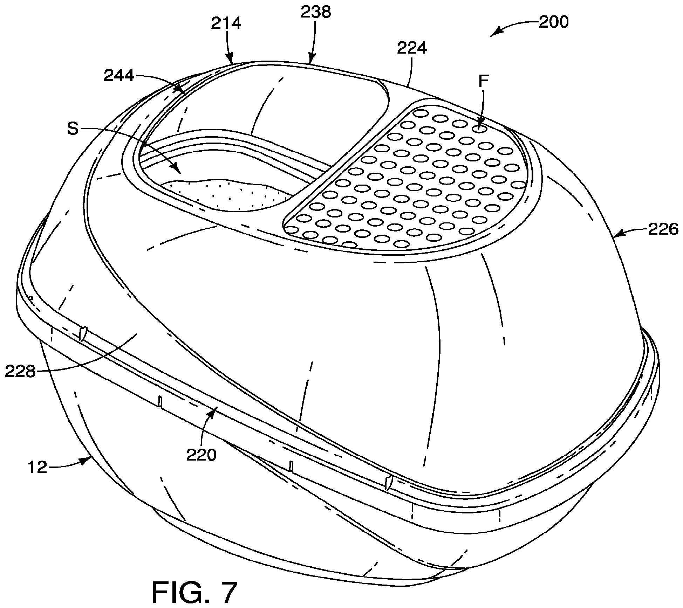

Referring now to Figure 7, a second modified litter container 210 will now be discussed. Due to the similarity between the litter container 210 and the litter containers 10 and 110, structures of the modified litter container 210 having identical corresponding structures in the litter container 110 will receive the same reference numeral. Any modified structures of the litter container 210 will receive the same reference numeral as that of the corresponding structures of the litter container 110 but increased by 100.

The litter container 210 contains a bottom pan 12 configured to contain cat litter L and a modified top pan 214 configured to be disposed on top of the bottom pan 12 at rimmed portions 220 of the top and bottom pans 214 and 12. The litter container 210 is identical to the litter container 110 except that the top pan 114 has been replaced with the modified top pan 214. The modified top pan 214 has a pet/user access opening 244 disposed on a top surface of the top pan 214 and a modified filter area F. The pet access opening 244 of the modified top pan 214 is a modified door assembly 238. The modified door assembly 238 is configured to enable user/pet access from a top surface 224 of the litter box to an interior space S of the litter container 210. With the modified door assembly 238 of the litter container 210, the pet or user accesses the interior space S of the litter container 210 from the top surface 224 of the litter container 210. With this configuration, spillage of cat litter is reduced when the pet exits the litter container 210.

In understanding the scope of the present invention, the term "comprising" and its derivatives, as used herein, are intended to be open ended terms that specify the presence of the stated features, elements, components, and/or groups, but do not exclude the presence of other unstated features, elements, components, and/or groups. The foregoing also applies to words having similar meanings such as the terms, "including", "having" and their derivatives. Also, the terms "part," "portion," or "member" when used in the singular can have the dual meaning of a single part or a plurality of parts unless otherwise stated.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "connected", "coupled" and their derivatives.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A litter container comprising:
a bottom pan including a first inner space; and
a top pan including a second inner space and configured to be disposed on the bottom pan so that the first and second inner spaces form an interior space of the litter container, the top pan having a door assembly, the door assembly comprising a portion of a top surface of the litter container and a portion of a front surface of the litter container.

2. The litter container of claim 1, wherein
the door assembly includes a first door and a second door, the first door being operatively connected to the second door.

3. The litter container of claim 2, wherein
one of the first and second doors extends from the top surface of the litter container to the front surface of the litter container.

4. The litter container according to claim 2, wherein
a peripheral edge of the door assembly is defined by at least one edge of the first door and at least one edge of the second door.

5. The litter container according to claim 2, wherein
the first and second doors are swingably attached at an attachment area.

6. The litter box according to claim 5, wherein
one of the first and second doors is swingable 360 degrees about a rotational axis of the attachment area.

7. The litter container according to claim 5, wherein
at least a portion of the first door is disposed on the top surface of the litter container and is configured to be lifted such that the interior space of the litter container is accessible to a user.

8. The litter container according to claim 7, wherein
the second door extends from the top surface to the front surface of the litter box and is configured to be swingable at the attachment area between the first and second doors when first door is lifted.

9. The litter container according to claim 8, wherein
the second door is swingable 360 degrees about a rotational axis of the attachment area.

10. The litter container according to claim 6, wherein
the first door is liftably attached to the top surface of the litter container by a hinge.

11. The litter container according to claim 3, wherein
the first door includes at least one edge having a first shape that corresponds to a second shape of an edge of the second door.

12. The litter container according to claim 7, wherein
the first door is configured to lie on an interior rim of the litter container is in a closed configuration of the first door.

13. The litter container according to claim 12, wherein
the first door is configured to overlie the top surface of the litter container in an open configuration of the first door.

14. The litter container according to claim 7, wherein
the first door includes a first handle member configured to enable a user to lift the first door.

15. The litter container according to claim 14, wherein
the second door includes a second handle member configured to enable the user to swing the second door with respect to the first door at the attachment area.

16. The litter container according to claim 15, wherein
the second handle member of the second door is a protrusion disposed on a top portion of the second door.

17. The litter container according to claim 8, wherein
the second door is transparent to enable a pet to see into the interior space of the litter container.

18. The litter container according to claim 1, wherein
the door assembly is a transparent door extending from the top surface of the litter container to the front surface of the litter container.

19. The litter container according to claim 20, wherein
the door assembly is swingably attached to the litter container at an attachment portion such that the door assembly is swingable in both the upward direction and the downward direction.

20. A litter container comprising:
a bottom pan having a first inner space; and
a top pan having a second inner space, the top pan being configured to be fixedly attached to the bottom pan so that the first and second inner spaces form an interior space of the litter container, the top pan having a door assembly, the door assembly being configured to enable access from a top surface of the litter box to the interior space.
